# EUROPÄISCHE PATENTSCHRIFT

(11) **EP 2 781 160 B1**
(45) Veröffentlichungstag und Bekanntmachung des Hinweises auf die Patenterteilung: **30.11.2016**
(21) Anmeldenummer: 13160377.1
(22) Anmeldetag: 21.03.2013
(51) Int. Cl.: A23P 30/25, A22C 13/00

(54) **Vorrichtung zum Herstellen koextrudierter Lebensmittelprodukte**
Device for producing coextruded food products
Dispositif de fabrication de produits alimentaires coextrudés

(43) Veröffentlichungstag der Anmeldung: 24.09.2014
(73) Patentinhaber: Albert Handtmann Maschinenfabrik GmbH & Co. KG, 88400 Biberach (DE)
(72) Erfinder: Baechtle, Manfred, 88433 Schemmerhofen (DE); Mueller, Gerhard, 88433 Schemmerhofen (DE)
(74) Vertreter: Grünecker Patent- und Rechtsanwälte PartG mbB

(56) Entgegenhaltungen:
- WO-A1-2011/087359
- Flores H.: "Principles of Coextrusion", Stork Food Systems , 24. September 2008 (2008-09-24), Seiten 1-44, XP002710031, Gefunden im Internet: URL:http://www.cmc-cvc.com/sites/default/f iles/files/Coextrusion.pdf [gefunden am 2013-08-06]
- Albert Handtmann Maschinenfabrik GmbH & Co. KG: "ConPro system", , XP002710032, Gefunden im Internet: URL:http://www.handtmann.de/uploads/media/ ConPro_System.pdf [gefunden am 2013-08-06]

## Beschreibung

Die Erfindung betrifft eine Vorrichtung gemäß Oberbegriff des Patentanspruchs 1.

Aus Technologie-Prospekten "ConPro-System" der Firma Albert Handtmann, Maschinenfabrik GmbH & Co. KG, D-88400 Biberach/Riss (Internet: info.maschines@handtmann.de, oder www.handtmann.de) sind Vorrichtungen der Typen ConPro 200 und ConPro 400 sowie ConPro Link mit der Funktion "Abdrehen" und ConPro Therm mit Kochanlage und Einlegeroboter bekannt, mit denen koextrudierte, z.B. mit einer Außenmasse ummantelte Lebensmittel herstellbar sind. Ein Strang einer pastösen Innenmasse, z.B. Wurstbrät, wird vollumfänglich mit einem Gel ummantelt, welches beispielsweise mit Hilfe einer Fixierlösung verfestigt wird. Anschließend kann der Strang abgeteilt oder abgedreht werden. In den bekannten Vorrichtungen werden separate Füllmaschinen für die Innenmasse und für die Außenmasse sowie eine Koextrudiereinheit kombiniert. Die Füllmaschinen müssen aufeinander abgestimmt arbeiten, da die Menge der Außenmasse sehr exakt auf die Menge der Innenmasse abzustimmen ist. Jede Füllmaschine weist eine eigene Steuerung auf. Die Steuerungen können optional über eine Datenschnittstelle miteinander verbunden sein. In jeder Füllmaschine ist sowohl die Massen-Förderpumpe als auch deren Antrieb enthalten. Die Innenmassen-Füllmaschine kann als Master fungieren, der die Außenmassen-Füllmaschine als Slave zugeordnet ist.

Aus WO 2011/087359 A1 ist eine Vorrichtung zum Herstellen coextrudierter Wurstprodukte bekannt. Einer Co-Extrudiereinheit sind mehrere Behandlungsstufen nachgeschaltet. Die Innenmasse wird der Co-Extrudiereinheit axial über eine Leitung mit Druck zugeführt. Die Außenmasse wird direkt seitlich in einem Coextrudierkopf eingeführt. In der Co-Extrudiereinheit ist eine Pumpe enthalten, die die Innenmasse in den Coextrudierkopf fördert.

Aus Flores H.: "Principles of Coextrusion", Stork Food Systems, 24.09.2008, Seiten 1 bis 44, XP-002710031 ist durch Abbildungen auf den Seiten 10 (Seitenansicht) und 11 (Perspektivansicht eines Ausschnitts) eine Vorrichtung zum Herstellen coextrudierter Wurstprodukte bekannt. Die Perspektivansicht verdeutlicht, dass der Coextrudierkopf von einem Gehäuse einer Co-Extrudiereinheit vorsteht. Dem Coextrudierkopf wird die Außenmasse, in diesem Fall ein Gel, über ein Schlauchleitungssystem und eine Zuführeinrichtung zugeführt, die seitlich der Co-Extrudiereinheit platziert ist. Die Co-Extrudiereinheit ist eine von der Innenmassen-Füllmaschine baulich getrennte Komponente der Vorrichtung.

Auf dem Markt sind ferner Vorrichtungen des Typs RS 191 der Firma Risco zur Herstellung solcher mit Gel ummantelter Wurstprodukte bekannt, bei denen bei der Koextrusion die Außenmasse über eine in einer Koextrudiereinheit angeordnete Pumpe zugeführt wird, die in der Koextrudiereinheit einen Antrieb aufweist. Der Aufbau ist aufwändig, da die Innen- und Außenmassen von unterschiedlichen Maschinen bereitgestellt werden und diese Maschinen aufeinander exakt abzustimmen sind. Die Koextrudiereinheit benötigt eine zusätzliche Steuerung zumindest für den Antrieb der Pumpe für die Außenmasse, oder/und kann über eine Datenschnittstelle mit der Steuerung der Innenmassen-Füllmaschine verlinkt sein.

Der bauliche Aufwand und der Platzbedarf nehmen bei den bekannten Vorrichtungen nochmals erheblich zu, wenn beispielsweise auch eine weitere Komponente wie ein Gleit-
oder Haftmittel verarbeitet werden muss, oder eine Fixierlösung zum Verfestigen der aufgebrachten Außenmasse zu applizieren ist.

Aus EP 0 226 925 A1 ist eine Vorrichtung dieser Art bekannt, bei der einer Füllmaschine als nachgeschaltete Maschinen-Einheit eine Zahnradpumpe mit einem eigenen Antrieb zugeordnet ist.

Bei den bekannten Vorrichtungen lässt sich keine im Hinblick auf eine einfache Bedienung zweckmäßige zentrale Steuerung vorsehen, sind gegebenenfalls externe Datenschnittstellen notwendig, benötigt die Vorrichtung unzweckmäßig viel Platz, sind die Kosten der Vorrichtung hoch, und ist der Aufwand bei der Reinigung der Baugruppen der Vorrichtung hoch.

Der Erfindung liegt die Aufgabe zugrunde, eine Vorrichtung der Eingangs genannten Art anzugeben, die trotz einfacher Bedienbarkeit, geringerem Platzbedarf und verringertem Reinigungsaufwand kostengünstiger als bekannte Lösungen ist.

Die gestellte Aufgabe wird mit den Merkmalen des Patentanspruchs 1 gelöst.

Da mindestens ein weiterer Antrieb in die Innenmassen-Füllmaschine integriert ist, während jede weitere Pumpe außen an der Innenmassen-Füllmaschine platziert ist, wird eine zentrale Steuerung der Antriebe ermöglicht, welche die Bedienung der Vorrichtung erheblich vereinfacht. Externe Datenschnittstellen sind nicht notwendig. Die Vorrichtung beansprucht bei gleicher Leistungsfähigkeit weniger Platz und ist kostengünstiger. Der Reinigungsaufwand ist erheblich verringert. In jedem Fall ist zumindest der Antrieb der außerhalb der Innenmassen-Füllmaschine angeordneten Außenmassen-Förderpumpe in die Innenmassen-Füllmaschine integriert.

Sind neben der Außenmassen-Pumpe weitere außenliegende Pumpen vorgesehen, so sind zweckmäßig auch deren Antriebe in die Innenmassen-Füllmaschine integriert. Diese fungiert sozusagen als Antriebs-Zentrale peripherer Pumpen und kann diese auch zentral steuern, falls zweckmäßig.

In einer zweckmäßigen Ausführungsform ist zumindest ein weiterer, in die Innenmassen-Füllmaschine integrierter Antrieb mit der zentralen Steuerung verlinkt, nämlich z.B. der der Außenmassen-Pumpe. Davon ausgenommen kann ein Antrieb einer optional vorgesehenen Feindosierpumpe für die Außenmasse sein, der gegebenenfalls fest einstellbar ist oder eine eigene Steuerung besitzt. Dies schließt jedoch nicht aus, im Falle einer optional vorgesehenen Feindosierpumpe deren Antrieb auch mit der zentralen Steuerung der Innenmassen-Füllmaschine zu verknüpfen.

Die Pumpe für die Innenmasse ist zusammen mit ihrem Antrieb fest in die Innenmasse-Füllmaschine eingegliedert, wie auch der Antrieb für die außen an der Füllmaschine platzierte Außenmassen-Pumpe, deren Antrieb von der zentralen Steuerung gesteuert wird.

Bei einer zweckmäßigen Ausführungsform ist optional die Feindosierpumpe für die Außenmasse in der Außenmassen-Zuführung von der Pumpe für die Außenmasse zur Koextrudiereinheit angeordnet, während ihr Antrieb ebenfalls in die Innenmassen-Füllmaschine integriert ist.

Falls in einer weiteren Ausführungsform optional zumindest eine dritte Komponente mit verarbeitet werden soll, wie ein Gleitmittel oder Haftmittel, kann für diese dritte Komponente außen an der einzigen Innenmassen-Füllmaschine eine Komponentenpumpe platziert sein, deren Antrieb ebenfalls in die Innenmassen-Füllmaschine integriert und gegebenenfalls mit der zentralen Steuerung verlinkt ist.

In allen vorbeschriebenen Ausführungsformen kann ferner mit einem zusätzlichen, außerhalb der einzigen Innenmassen-Füllmaschine platzierten Modul mit eigener Pumpe, deren Antrieb an die zentrale Steuerung angeschlossen sein kann, eine Fixierlösung auf oder in das aus der Koextrudiereinheit austretende koextrudierte Lebensmittelprodukt appliziert werden.

Zweckmäßig sind die weiteren, außerhalb der Innenmassen-Füllmaschine platzierten Pumpen an der Innenmassen-Füllmaschine entweder fest oder demontierbar angebracht.

Jede außerhalb angeordnete, weitere Pumpe, ausgenommen gegebenenfalls die Feindosierpumpe, kann direkt in einen jeweiligen Vorratsbehälter eingegliedert sein, der, vorzugsweise, einen Einfülltrichter aufweist. Diese Module können baulich einfach und kompakt sein, da sie keine zu steuernden Antriebssysteme enthalten.

Zweckmäßig weist jeder in die Innenmassen-Füllmaschine integrierte Antrieb einen elektrischen Antriebsmotor auf, gegebenenfalls kombiniert mit einem Getriebe oder Ähnlichem. Als Antriebe können Elektromotoren, hydraulische oder auch pneumatische Antriebe dienen.

Der bauliche Aufwand ist gering und ermöglicht eine einfache Umrüstbarkeit, wenn jeder in die Innenmassen-Füllmaschine integrierte Antrieb über einen aus der Innenmassen-Füllmaschine nach außen geführten Antriebsstrang mit der zugehörigen Pumpe gekoppelt ist.

Im Hinblick auf geringen Platzbedarf ist es zweckmäßig, wenn die Koextrudiereinheit und die weiteren, an einen Koextrudierkopf der Koextrudiereinheit angeschlossenen Pumpen außen um einen einen Einfülltrichter aufweisenden Unterbau der Innenmassen-Füllmaschine verteilt platziert und daran angebracht sind, z.B. mit Bodenfreiheit zwecks besserer Reinigung der Außenumgebung der Füllmaschine.

Bei der Innenmassen-Füllmaschine handelt es sich zweckmäßig um einen Vakuumfüller für beispielsweise Wurstbrät, obwohl auch andere Lebensmittelprodukte auf diese Weise mit der Vorrichtung verarbeitbar sind.

Anhand der Zeichnung werden Ausführungsformen des Anmeldungsgegenstandes erläutert. Es zeigen:
Fig. 1 eine schematische Draufsicht auf eine Vorrichtung zum Herstellen koextrudierter Lebensmittelprodukte,
Fig. 2 eine Draufsicht auf eine weitere Ausführungsform der Vorrichtung, und
Fig. 3 eine Draufsicht auf eine noch weitere Ausführungsform der Vorrichtung.

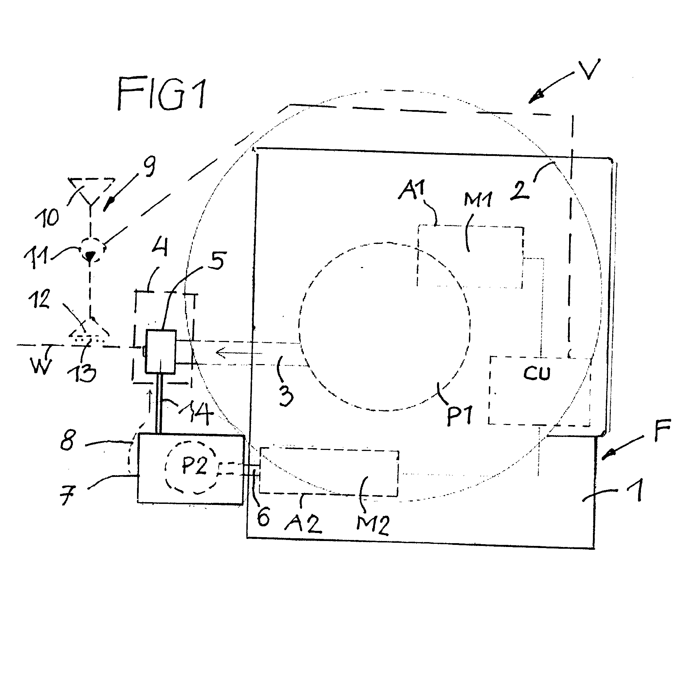

Fig. 1 verdeutlicht in einer Draufsicht eine Vorrichtung V zum Herstellen von koextrudierten Lebensmittelprodukten, konkret beispielsweise koextrudierten Wurstprodukten W. Die Vorrichtung V umfasst eine Innenmassen-Füllmaschine F mit einer fest in einen einen Trichter 2 aufweisenden Unterbau 1 integrierten Pumpe P1 zum Fördern einer Innenmasse. Die Innenmassen-Füllmaschine F fördert Wurstbrät durch eine Innenmassen-Zuführung 3 nach außen zu einer dort platzierten Koextrudiereinheit 4. Die Pumpe P1 ist mit einem, z.B. fest in den Unterbau 1, integrierten Antrieb A1 gekoppelt, der einen Elektromotor M1 enthält, der mit einer zentralen Steuerung CU der Innenmassen-Füllmaschine F verlinkt ist. Die zentrale Steuerung CU kann sich ebenfalls im Unterbau 1 befinden, oder außen an oder bei diesem angeordnet sein.

Die Koextrudiereinheit 4 umfasst einen Koextrudierkopf 5, aus dem das koextrudierte Wurstprodukt W austritt, nachdem die Innenmasse mit einer Außenmasse ummantelt worden ist, die von einer außerhalb des Unterbaus 1 angeordneten Pumpe P2 zum Fördern der Außenmasse über eine Außenmassen-Zuführung 14 dem Koextrudierkopf 5 zugeführt wird. Die Pumpe P2 ist über einen Antriebsstrang 6 mit einem Antrieb A2 gekoppelt, der einen Elektromotor M2 enthält, und fest in die Innenmassen-Füllmaschine F beziehungsweise deren Unterbau 1 integriert und mit der Steuerung CU verlinkt ist.

Die Pumpe P2 kann direkt mit einem Vorratsbehälter 7 versehen sein, der, vorzugsweise, mit einem Einfülltrichter 8 für die Außenmasse ausgestattet sein kann. Die Pumpe P2 beziehungsweise der Vorratsbehälter 7 ist zweckmäßig fest oder demontierbar an der Füllmaschine angebracht.

Obwohl die Vorrichtung V in Fig. 1 primär auf die Herstellung des mit Gel ummantelten Wurstprodukts W gerichtet ist, zeigt Fig. 1 eine optionale Zusatzausstattung mit einem Modul 9 stromab der Koextrudiereinheit 4, wobei das Modul 9 einen Vorratsbehälter oder Einfülltrichter 10 für eine Fixierlösung aufweist, die durch eine Förder- und/oder Dosierpumpe 11 über einen Verteiler 12 wie bei 13 angedeutet auf das koextrudierte Wurstprodukt W aufgebracht wird. Die Pumpe 11 kann, optional, mit der zentralen Steuerung CU verlinkt sein.

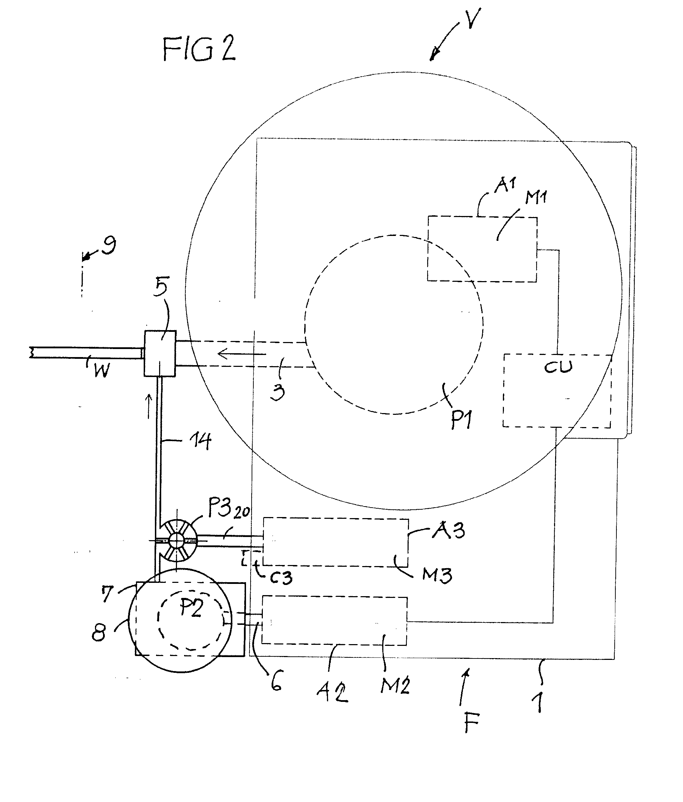

Fig. 2 verdeutlicht in Draufsicht eine gegenüber Fig. 1 erweiterte Ausführungsform der Vorrichtung V, wobei auch hier weitere Antriebe A2, A3, A4 wie der fest integrierte Antrieb A1 in die Innenmassen-Füllmaschine F integriert sind.

Da bei bestimmten Produkten die Außenmasse außerordentlich präzise relativ zur Innenmasse dosiert werden muss, kann, wie in Fig. 2 gezeigt, zusätzlich eine Feindosierpumpe P3 zum Einsatz kommen. Diese Feindosierpumpe P3 ist z.B. in der Außenmassen-Zuführung 14 von der Pumpe P2 zum Koextrudierkopf 5 angeordnet und über einen Antriebsstrang 20 mit dem beispielsweise in den Unterbau 1 der Innenmassen-Füllmaschine F integrierten Antrieb A3 gekoppelt, der einen Elektromotor M3 enthält. Der weitere Aufbau der Vorrichtung V in Fig. 2 entspricht dem in Fig. 1, wobei allerdings das Modul 9 weggelassen ist, das optional dennoch vorgesehen werden kann.

In Fig. 2 ist der weitere Antrieb A3 der Feindosierpumpe P3 nicht mit der zentralen Steuerung CU verlinkt, sondern entweder fest eingestellt oder mit einer eigenen Steuerung C3 (Einstellvorrichtung) versehen, die beispielsweise am Unterbau 1 zugänglich ist. Alternativ könnte der weitere Antrieb A3 beziehungsweise dessen Elektromotor M3 mit der zentralen Steuerung CU verlinkt sein.

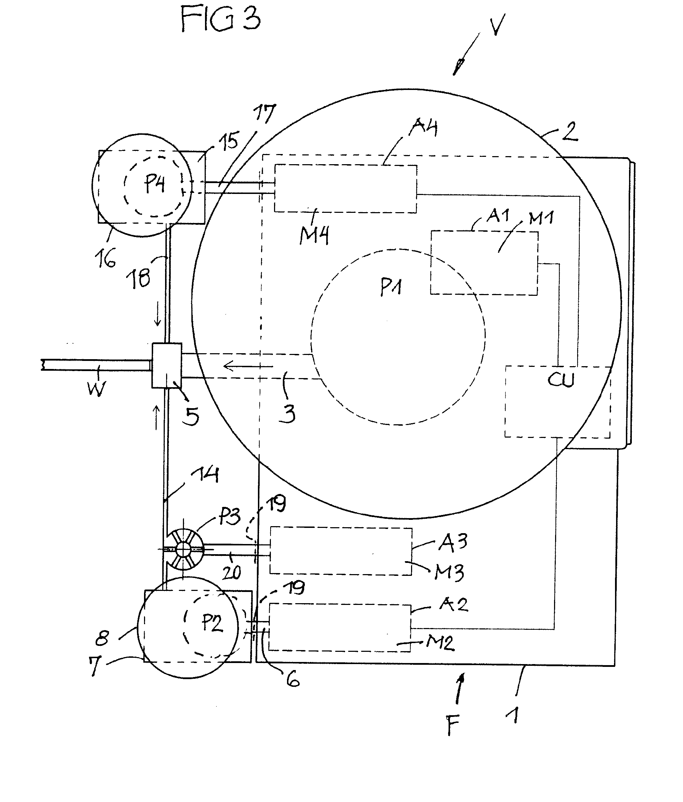

Fig. 3 verdeutlicht in einer Draufsicht schematisch eine weitere Ausführungsform der Vorrichtung V für beispielsweise Anwendungsfälle, bei denen eine dritte Komponente beim Koextrudierprozess zu verarbeiten ist, z.B. ein Gleit- oder Haftmittel, das bei der Koextrusion zwischen dem Strang aus der Innenmasse und der Ummantelung aus der Außenmasse eingebracht wird. Alternativ könnte es sich bei dieser dritten Komponente auch um eine weitere Lebensmittelschicht handeln, Um diese dritte Komponente einarbeiten zu können, ist bei der Ausführungsform in Fig. 3 analog zu der Pumpe P2 zum Fördern der Außenmasse eine weitere Pumpe P4 beispielsweise mit einem Vorratsbehälter 15 und einem Einfülltrichter 16 außen beim Unterbau 1 der Innenmassen-Füllmaschine F angeordnet und über eine Komponentenzuführung 18 mit dem Koextrudierkopf 5 verbunden. Die weitere Pumpe P4 steht über einen Antriebsstrang 17 mit einem weiteren, in die Innenmassen-Füllmaschine F integrierten Antrieb A4 in Verbindung, der einen Elektromotor M4 enthält und mit der zentralen Steuerung CU verlinkt ist.

In Fig. 3 ist gestrichelt bei den Antriebssträngen 17, 20, 6 angedeutet, dass hier eine demontierbare oder trennbare Verbindung vorgesehen sein könnte. Dies untermauert, dass die weiteren Pumpen P2, P3, P4, deren Antriebe A2, A3, A4 in die Innenmassen-Füllmaschine F fest integriert sind, demontierbar an der Innenmassen-Füllmaschine F angebracht sein können.

Der Reinigungsaufwand für die jeweilige Ausführungsform der Fig. 1 bis 3 ist zumindest dadurch verringert, dass die weiteren Antriebe A2 bis A4 in die Innenmassen-Füllmaschine F integriert sind, und mit der jeweiligen Masse in Kontakt kommende Komponententeile bei den weiteren Pumpen P2, P3 und P4 deshalb leichter zu reinigen sind. Eingesetzte Reinigungsmittel erreichen die Antriebe A2, A3, A4 nicht, und die Pumpen P2 bis P4 mit ihren Vorratsbehältern sind gut reinigbar gegebenenfalls vom Boden entfernt platziert oder nur mit schlanken Füßen abgestützt.

Der Koextrudiereinheit 4 beziehungsweise dem Koextrudierkopf 5 können weitere Arbeitsmodule nachgeordnet werden, wie z.B. Einrichtungen zum Unterteilen des endlos produzierten Strangs in kürzere Abschnitte mit sauber geformten Enden, und/oder Einrichtungen zum thermischen Behandeln oder Aufbringen weiterer Behandlungsmittel, zum Aufhängen der getrennten Abschnitte zum Räuchern und/oder zum Verpacken.

## Patentansprüche

1. Vorrichtung (V) zum Herstellen koextrudierter Lebensmittelprodukte (W), insbesondere mit einer Außenmasse ummantelter Wurstprodukte (W), mit einer Innenmassen-Füllmaschine (F), die eine mit einem ersten Antrieb (A1) gekoppelte erste Pumpe (P1) für eine Innenmasse und eine Steuerung (CU) zumindest für den ersten Antrieb (A1) enthält, einer über eine Innenmassen-Zuführung (3) an die Innenmassen-Füllmaschine (F) angeschlossenen, außenliegenden Koextrudiereinheit (4), und zumindest einer mit einem Antrieb (A2) gekoppelten, an die Koextrudiereinheit (4) angeschlossenen Pumpe (P2) zum Fördern der Außenmasse zur Koextrudiereinheit (4), **dadurch gekennzeichnet, dass** auch der Antrieb (A2) der Pumpe (P2) für die Außenmasse in die Innenmassen-Füllmaschine (F) integriert ist.

2. Vorrichtung nach Anspruch 1, **dadurch gekennzeichnet, dass** weitere, außerhalb der Innenmassen-Füllmaschine (F) angeordnete und, vorzugsweise, an die Koextrudiereinheit (4) angeschlossene, jeweils mit einem Antrieb (A3, A4) gekoppelte, Pumpen (P3, P4) vorgesehen sind, und dass zumindest ein Antrieb (A3, A4) einer weiteren Pumpe (A3, A4), vorzugsweise alle Antriebe weiterer Pumpen, in die Innenmassen-Füllmaschine (F) integriert ist bzw. sind.

3. Vorrichtung nach einem der Ansprüche 1 bis 2 , **dadurch gekennzeichnet, dass** mindestens der Antrieb (A2) der Außenmassen-Pumpe (P2) mit der Füllmaschinen-Steuerung (CU) verlinkt ist, und dass, vorzugsweise, auch weitere Antriebe (A3, A4) weiterer Pumpen (P3, P4) mit der Füllmaschinen-Steuerung (CU) verlinkt sind.

4. Vorrichtung nach Anspruch 1, **dadurch gekennzeichnet, dass** die außerhalb der Innenmassen-Füllmaschine (F) angeordnete Außenmassen-Pumpe (P2) über eine außenliegende Außenmassen-Zuführung (14) mit der Koextrudiereinheit (4) verbunden ist.

5. Vorrichtung nach Anspruch 4, **dadurch gekennzeichnet, dass** ein weiterer, in die Innenmassen-Füllmaschine (F) integrierter Antrieb (A3) mit einer in der Außenmassen-Zuführung (14) zur Koextrudiereinheit (4) angeordneten Feindosierpumpe (P3) für die Außenmasse gekoppelt ist.

6. Vorrichtung nach Anspruch 2, **dadurch gekennzeichnet dass** ein weiterer, in die Innenmassen-Füllmaschine (F) integrierter Antrieb (A4) mit einer außenliegend angeordneten, über eine separate Komponenten-Zuführung (18) mit der Koextrudiereinheit (4) verbundenen Komponenten-Pumpe (P4) gekoppelt ist.

7. Vorrichtung nach wenigstens einem der Ansprüche 1 bis 6, **dadurch gekennzeichnet, dass** jede außenliegende Pumpe (P2, P3 oder P4) an einem Unterbau (1) der Innenmassen-Füllmaschine (F) entweder fest oder abnehmbar angebracht ist.

8. Vorrichtung nach wenigstens einem der vorhergehenden Ansprüche, **dadurch gekennzeichnet, dass** der Außenmassen-Pumpe (P2) und/oder der Komponentenpumpe (P4) ein Vorratsbehälter (7, 15), vorzugsweise jeweils mit einem Einfülltrichter (8, 16), zugeordnet ist.

9. Vorrichtung nach wenigstens einem der vorhergehenden Ansprüche, **dadurch gekennzeichnet, dass** jeder Antrieb (A1) bis (A4) entweder einen elektrischen Antriebsmotor (M1 bis M4) aufweist und/oder als hydraulischer oder pneumatischer Antrieb ausgebildet ist.

10. Vorrichtung nach Anspruch 5, **dadurch gekennzeichnet, dass** der in die Innenmassen-Füllmaschine (F) integrierte Antrieb (A3) der Außenmassen-Feindosierpumpe (P3) eine eigene Steuerung (C3) aufweist.

11. Vorrichtung nach wenigstens einem der vorhergehenden Ansprüche, **dadurch gekennzeichnet, dass** jeder weitere Antrieb (A2, A3, A4) über einen aus der Innenmassen-Füllmaschine (F) nach außen geführten Antriebsstrang (6, 20, 17) mit der zugeordneten Pumpe (P2, P3, P4) gekoppelt ist.

12. Vorrichtung nach wenigstens einem der vorhergehenden Ansprüche, **dadurch gekennzeichnet, dass** die Koextrudiereinheit (4) und die weiteren, außen liegenden, an einem Koextrudierkopf (5) der Koextrudiereinheit (4) angeschlossenen Pumpen (P2, P3, P4) außen um einen einen Einfülltrichter (2) aufweisenden Unterbau (1) der Innenmassen-Füllmaschine (F) verteilt platziert sind.

13. Vorrichtung nach Anspruch 1, **dadurch gekennzeichnet, dass** die InnenmassenFüllmaschine (F) ein Vakuumfüller ist.

## Claims

1. Device (V) for manufacturing co-extruded food products (W), in particular, sausage products (W) coated with an outer mass, comprising an inner mass filling machine (F) containing a first pump (P1) for an inner mass that is coupled to a first drive (A1), and a control unit (CU) for at least said first drive (A1), a coextrusion unit (4) disposed on the outside and connected via an inner mass supply (3) to said inner mass filling machine (F), and at least one pump (P2) delivering said outer mass to said coextrusion unit (4) and is coupled to a drive (A2) and connected to said coextrusion unit (4), **characterized in that** also said drive (A2) of said pump (P2) for said outer mass is integrated into said inner mass filling machine (F).

2. Device according to claim 1, **characterized in that** further pumps (P3, P4) are provided which are disposed outside of the inner mass filling machine (F) and preferably connected to said coextrusion unit (4), each being coupled to a drive (A3, A4), and that at least one drive (A3, A4) of a further pump (A3, A4), preferably all drives of further pumps, is or are, respectively, integrated into said inner mass filling machine (F).

3. Device according to one of claims 1 to 2, **characterized in that** at least said drive (A2) of said outer mass pump (P2) is linked to said filling machine control unit (CU), and **in that** preferably also further drives (A3, A4) of further pumps (P3, P4) are linked to said filling machine control unit (CU).

4. Device according to claim 1, **characterized in that** said outer mass pump (P2) being disposed outside of said inner mass filling machine (F) is connected to said coextrusion unit (4) via an outer mass supply (14) being disposed on the outside of said inner mass filling machine (F).

5. Device according to claim 4, **characterized in that** a further drive (A3) integrated into said inner mass filling machine (F) is coupled to a fine-dosing pump (P3) for said outer mass which is arranged in said outer mass supply (14) extending to said coextrusion unit (4).

6. Device according to claim 2, **characterized in that** a further drive (A4) integrated into said inner mass filling machine (F) is coupled to a fine-dosing pump (P4) for said outer mass which is arranged on the outside and connected via a separate component supply (18) to said coextrusion unit (4).

7. Device according to at least one of the claims 1 to 6, **characterized in that** each pump (P2, P3 or P4) being disposed on the outside of the inner mass filling machine (F) is either fixedly or detachably attached to a base frame (1) of said inner mass filling machine (F).

8. Device according to at least one the preceding claims, **characterized in that** said outer mass pump (P2) and/or said component pump (P4) is associated with a reservoir (7, 15), each preferably comprising a hopper funnel (8, 16).

9. Device according to at least one the preceding claims, **characterized in that** each drive (A1) to (A4) either comprises an electric drive motor (M1 to M4) and/or is embodied as a hydraulic or pneumatic drive.

10. Device according to claim 5, **characterized in that** said drive (A3) of said outer mass fine-dosing pump (P3) being integrated into said inner mass filling machine (F) comprises its own control unit (C3).

11. Device according to at least one the preceding claims, **characterized in that** each further drive (A2, A3, A4) is coupled to the respectively associated pump (P2, P3, P4) via a drive train (6, 20, 17) extending from said inner mass filling machine (F) to the outside.

12. Device according to at least one the preceding claims, **characterized in that** said coextrusion unit (4) and said further pumps (P2, P3, P4) being disposed on the outside and connected to a coextrusion head (5) of said coextrusion unit (4) are distributed at the outside around a base frame (1) of said inner mass filling machine (F) the base frame comprising a hopper funnel (2).

13. Device according to claim 1, **characterized in that** said inner mass filling machine (F) is a vacuum filler.

## Revendications

1. Dispositif (V) de fabrication de produits alimentaires co-extrudés (W), en particulier de saucisses (W) enrobées dans une masse extérieure, avec une machine de remplissage en masse intérieure (F) qui contient une première pompe (P1) pour une masse intérieure, couplée avec un premier entraînement (A1), et une commande (CU) au moins pour le premier entraînement (A1), une unité de co-extrusion (4) externe reliée à la machine de remplissage en masse intérieure (F) par l'intermédiaire d'une alimentation en masse intérieure (3) et au moins une pompe (P2) couplée avec un entraînement (A2) et reliée à l'unité de co-extrusion (4) pour l'acheminement de la masse extérieure vers l'unité de co-extrusion (4), **caractérisé en ce que** l'entraînement (A2) de la pompe (P2) pour la masse extérieure est aussi intégré dans la machine de remplissage en masse intérieure (F).

2. Dispositif selon la revendication 1, **caractérisé en ce que** sont prévues d'autres pompes (P3, P4) disposées à l'extérieur de la machine de remplissage en masse intérieure (F) et de préférence reliées à l'unité de co-extrusion (4) et respectivement couplées à un entraînement (A3, A4) et que au moins un entraînement (A3, A4) d'une autre pompe (A3, A4), de préférence tous les entraînements des autres pompes, est/sont intégré(s) dans la machine de remplissage en masse intérieure (F).

3. Dispositif selon l'une des revendications 1 à 2, **caractérisé en ce qu'**au moins l'entraînement (A2) de la pompe de masse extérieure (P2) est connecté à la commande de machine de remplissage (CU) et que de préférence d'autres entraînements (A3, A4) d'autres pompes (P3, P4) sont également connectées à la commande de machine de remplissage (CU).

4. Dispositif selon la revendication 1, **caractérisé en ce que** la pompe de masse extérieure (P2) disposée à l'extérieur de la machine de remplissage en masse intérieure (F) est reliée à l'unité de co-extrusion (4) par l'intermédiaire d'une alimentation en masse extérieure (14) externe.

5. Dispositif selon la revendication 4, **caractérisé en ce qu'**un autre entraînement (A3) intégré dans la machine de remplissage de masse intérieure (F) est couplé à une pompe de dosage de précision (P3) pour la masse extérieure disposée dans l'alimentation en masse extérieure (14) de l'unité de co-extrusion (4).

6. Dispositif selon la revendication 2, **caractérisé en ce qu'**un autre entraînement (A4) intégré dans la machine de remplissage en masse intérieure (F) est couplé à une pompe de composants (P4) disposée à l'extérieur et reliée à l'unité de coextrusion (4) par l'intermédiaire d'une alimentation en composants (18) séparée.

7. Dispositif selon au moins une des revendications 1 à 6, **caractérisé en ce que** chaque pompe externe (P2, P3 ou P4) est fixée soit solidement soit de manière amovible à une sous-structure (1) de la machine de remplissage en masse intérieure (F).

8. Dispositif selon au moins une des revendications précédentes, **caractérisé en ce qu'**un réservoir (7, 15) est associé à la pompe de masse extérieure (P2) et/ou à la pompe de composants (P4), de préférence avec respectivement une trémie (8, 16).

9. Dispositif selon au moins une des revendications précédentes, **caractérisé en ce que** chaque entraînement (A1) à (A4) comporte un moteur d'entraînement électrique (M1 à M4) et/ou est formé par un entraînement hydraulique ou pneumatique.

10. Dispositif selon la revendication 5, **caractérisé en ce que** l'entraînement (A3) de la pompe de dosage de précision de la masse extérieure (P3) intégré dans la machine de remplissage en masse intérieure (F) comporte sa propre commande (C3).

11. Dispositif selon au moins l'une des revendications précédentes, **caractérisé en ce que** chaque autre entraînement (A2, A3, A4) est couplé avec sa pompe associée (P2, P3, P4) par l'intermédiaire d'une transmission (6, 20, 17) conduite vers l'extérieur à partir de la machine de remplissage en masse intérieure (F).

12. Dispositif selon au moins une des revendications précédentes, **caractérisé en ce que** l'unité de co-extrusion (4) et les autres pompes (P2, P4) externes reliées avec une tête de co-extrusion (5) de l'unité de co-extrusion (4) sont placées à l'extérieur de manière distribuée autour d'une sous-structure (1) de la machine de remplissage en masse intérieure (F) comportant une trémie (2).

13. Dispositif selon la revendication 1, **caractérisé en ce que** la machine de remplissage en masse extérieure (F) est un dispositif de remplissage sous vide.
